# EUROPÄISCHE PATENTSCHRIFT

(11) **EP 2 463 152 B1**
(45) Veröffentlichungstag und Bekanntmachung des Hinweises auf die Patenterteilung: **08.02.2017**
(21) Anmeldenummer: 10194437.9
(22) Anmeldetag: 10.12.2010
(51) Int. Cl.: B60Q 1/26

(54) **Beleuchtungselement im Außenspiegel**
Lighting element in external mirror
Elément d'éclairage dans le rétroviseur

(43) Veröffentlichungstag der Anmeldung: 13.06.2012
(73) Patentinhaber: SMR Patents S.à.r.l., 1653 Luxembourg (LU)
(72) Erfinder: Fritz, Daniel, 70374 Stuttgart (DE)
(74) Vertreter: Weber-Bruls, Dorothée

(56) Entgegenhaltungen:
- EP-A1- 2 151 350
- WO-A2-2007/005942
- FR-A1- 2 938 220
- US-A1- 2008 106 389

## Beschreibung

Die Erfindung betrifft einen Außenspiegel mit einer optischen Anzeigevorrichtung mit wenigstens einer Lichtquelle und einer Steuereinheit, die einem Assistenzsystem zugeordnet ist. Genauer gesagt betrifft die Erfindung eine Außenspiegelanordnung nach dem Oberbegriff von Anspruch 1.

### Stand der Technik

Kraftfahrzeuge mit Assistenzsystemen wie einem Spurwechselassistenzsystem sind beispielsweise aus der DE 103 18 741 A1 bekannt. Dabei überwachen ein oder mehrere Sensoren das seitliche und/oder rückwärtige Fahrzeugumfeld. Eine Steuereinheit rechnet, ob bei einem anstehenden Spurwechsel eine gefährliche Situation entstehen könnte. Sollte ein hoher Gefährdungsgrad vorliegen, so wird eine optische Anzeigevorrichtung, meist eine LED, am Außenspiegel angesteuert, die einen Hinweis auf die Gefährdung geben soll. Dabei ist vorgesehen, dass der Gefährdungszustand kontinuierlich durch das optische Anzeigemittel wiedergegeben wird.

Derartige Systeme haben jedoch den Nachteil, dass die Erkennbarkeit des optischen Signals bei unterschiedlicher Umgebungshelligkeit nicht gesichert ist. Eine fest vorgegebene Leuchtstärke kann bei grosser Dunkelheit zu einer Irritation des Fahrers führen und im Gegensatz dazu bei strahlendem Sonnenschein mitunter gar nicht zu erkennen sein.

Aus der DE102005038179 B4 ist eine Lösung bekannt, in der die Helligkeit der Lichtquelle über die Steuereinheit in Abhängigkeit einer ein Maß für die Umgebungshelligkeit darstellenden, der Steuereinrichtung gegebenen Messgröße veränderbar ist.

Anstatt mit einer vorgegebenen Helligkeit zu arbeiten, passt sich die Anzeige hier der aktuellen Umgebungshelligkeit an. Das bedeutet, dass im Falle einer relativ dunklen Umgebung die Lichtquelle der optischen Anzeigevorrichtung nur sehr schwach leuchtet, so dass die Anzeige bei einem Blick Richtung Außenspiegel zwar weiterhin deutlich zu erkennen ist, sie jedoch nicht irritiert oder gar blendet. In einer sehr hellen Umgebung, beispielsweise bei strahlendem Sonnenschein, leuchtet die Lichtquelle dann entsprechend hell, so dass ihr Licht nicht von dem der Sonne überdeckt wird. Die optische Wahrnehmbarkeit wird also an die Bedürfnisse des Fahrers angepasst.

Es wird dazu keine optische Lösung vorgeschlagen. Zudem besteht bei optischen Anzeigen immer das Problem, dass die Anzeigefläche homogen beleuchtet sein soll und sich zudem im Fall des Einsatzes in einem Kraftfahrzeug harmonisch in die Außenkontur des Fahrzeugs einpassen soll.

Weitere Außenspiegelanordnungen sind aus der, FR 2 938 220 A1 und US 2008/0106389 A1 bekannt. WO 2007/005942 A2 zeigt eine gattungsgemäße Außenspiegelanordnung.

Es ist Aufgabe der Erfindung die gattungsgemäße Außenspiegelanordnung derart weiterzuentwickeln, dass dessen optische Anzeige den hohen Anforderungen nach einer regelbaren, homogen ausgeleuchteten Anzeige genügt.

Diese Aufgabe wird durch die Merkmale des Kennzeichens von Anspruch 1 gelöst. Bevorzugte erfindungsgemäße Außenspiegelanordnung sind in den Ansprüchen 2 bis 7 beschrieben.

### Beschreibung der Erfindung

Die Lösung der Aufgabe wird durch den Einsatz von Displaytechnologie erreicht. Die nachfolgende Beschreibung erläutert die Ausführung der erfindungsgemäßen Lösung anhand von Ausführungsbeispielen.
- Fig. 1: zeigt einen typischen Einbauort
- Fig. 2: zeigt eine Anzeige im Stand der Technik als Explosionszeichnung
- Fig. 3: zeigt einen Schnitt durch eine Anzeige im Stand der Technik
- Fig. 4 und 5: zeigen eine erfindungsgemäße Anzeige
- Fig. 6: zeigt eine Ausführung, die nicht Bestandteil der Erfindung ist.

- Fig. 7: zeigt eine Beleuchtung hinter Spiegelglas, die nicht Bestandteil der Erfindung ist.

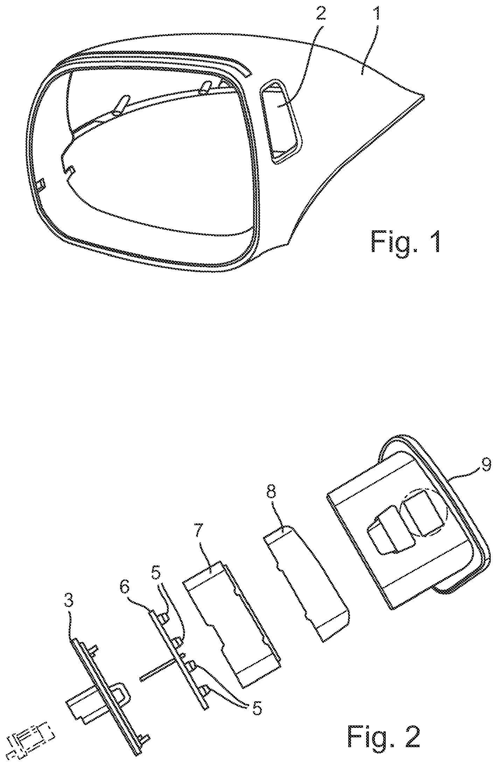

Optische Anzeigen am und im Außenspiegel müssen an einer Position angebracht sein, die es dem Fahrer erlaubt, die Anzeige zu sehen. Da es nicht von Vorteil ist, wenn der Strahlengang der optischen Anzeige aufwendig abgelenkt werden muss, bieten sich Einbaupositionen am und im Spiegelfuß oder im Bereich des Spiegelgehäuses an, der sich nahe am Fahrzeug erstreckt. Ein Einbaubeispiel ist in Figur 1 ausgeführt. Hier sieht man einen Teil einer Außenspiegelanordnung bestehend aus einem Spiegelfuß - hier nicht dargestellt-und einem dazu verschwenkbar gelagerten Spiegelkopf.

Figur 1 zeigt eine Gehäuseabdeckung 1, die den Spiegelkopf zumindest teilweise umschließt. Die Gehäuseabdeckung 1 weist mehrere Öffnungen auf, zum einen zur Aufnahme des Spiegelglases, das auf einer Halterung mit oder ohne Verstellmotor montiert ist, sowie auf der dem Spiegelglas abgewandten Seite eine Öffnung für einen Fahrtrichtungsanzeiger. Weiterhin weist die Gehäuseabdeckung 1 eine Öffnung 2 zur Aufnahme einer optischen Anzeige auf.

Im beschriebenen Beispiel wird die Öffnung 2 durch einen Materialaussparung gebildet. Es ist in einer anderen Ausführungsform auch eine Variante einsetzbar, bei der die Öffnung 2 für die optische Anzeige eine Lichtöffnung ist und das Material an dieser Stelle aus transparenten oder semi- transparenten Material besteht. Solche Lichtöffnungen lassen sich durch 2K Spritzguss herstellen.

Figur 2 zeigt den Aufbau einer optischen Anzeige wie er im Stand der Technik eingesetzt wird.

Ein Gehäusedeckel 3 verschließt ein Anzeigengehäuse 4 zu einem geschlossenen Modul, das in dieser Form verbaut wird. Ein geschlossenes Modul bedeutet eine bauliche Ausgestaltung, das Modul muss dabei nicht hermetische gegen die Umgebungseinflüsse wie Feuchtigkeit und Staub geschlossen sein. Innerhalb des Anzeigengehäuses 4 befinden sich die Lichtquellen auf einer Platine 6. Es handelt sich dabei um vier LEDs 5, die im äquidistantem Abstand montiert sind, um eine möglichst gleichmäßige Ausleuchtung der optischen Anzeige zu erreichen. Eine Sammellinse hier speziell eine Fresnellinse, die auf der Oberseite eines Hohlkörpers angebracht oder integriert ist, befindet sich im Strahlengang der LEDs. Eine Optikscheibe 8 optimiert die Abstrahl- Charakteristik der optischen Anzeige. Bei Bedarf können Optikscheibe und Sammellinse auch in einem optischen Bauteil unter gebracht werden. Darüber befindet sich eine äußere Abdeckscheibe 9, die der Geometrie und der Größe der Öffnung 2 angepasst ist und mit einem Dichtrand versehen ist, um das Eindringen von Staub und Feuchtigkeit zu verhindert.

Die Verwendung von LEDs ist im Stand der Technik gebräuchlich, aber auch andere Lichtquellen für die Hinterleuchtung sind möglich. EL- Folien oder OLEDs sowie deren Weiterentwicklungen werden verwendet. Die Anzahl der Lichtquellen und deren Anordnung hängt dabei von jeweiligen Display ab.

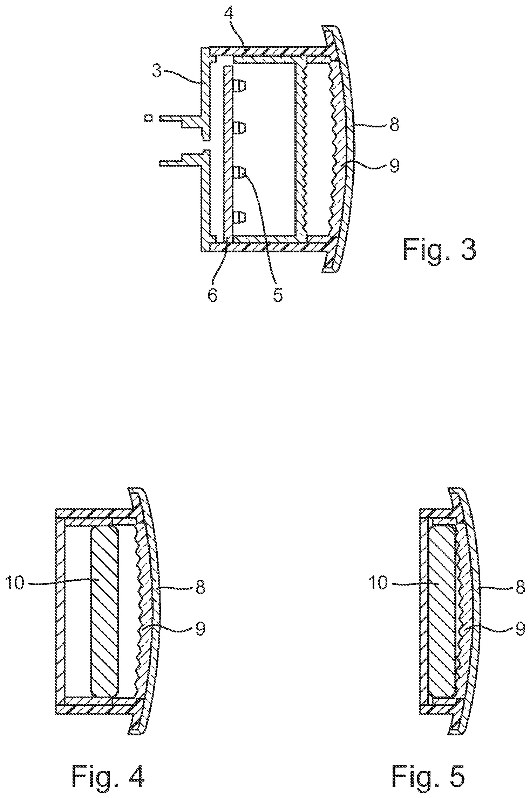

Figur 3 zeigt diesen Aufbau nochmals im Schnitt. Eine homogene Ausleuchtung der äußeren Abdeckscheibe 8 wird trotz des Aufwands mit Fresnellinse und Optikscheibe nicht erzielt. Es sind von außen immer noch Helligkeitsschwerpunkte der LEDs zu erkennen. Zudem können bei geeignetem Blickwinkel die LEDs und die Leiterplatte durch die Abdeckscheibe sichtbar sein.

Figur 4 zeigt einen Aufbau für eine optische Anzeige mit einem optisch aktiven Element, beispielsweise einem LCD Element 10. Als Lichtquelle werden keine einzelnen LEDs auf einer Platine verwendet, welche mit heutigem Stand der Technik eine vollständige Beleuchtung für Flüssigkristall-Zellen bzw. Displays erzielen. Verwendet werden in der erfindungsgemäßen Anzeige LCD Zellen mit integrierter Beleuchtung wie sie in hohen Stückzahlen für Mobiltelefone eingesetzt werden. Das LCD Element 10 wird in das Anzeigengehäuse 4 eingebaut und elektrisch angeschlossen. Im Beispiel der Figur 4 ist noch eine zusätzliche Optikscheibe vorhanden, die von der äußeren Abdeckscheibe 8 überdeckt ist. Um den Aufbau zu vereinfachen ist die Optikscheibe in Figur 5 nicht vorhanden. Das LCD Element wird von der äußeren Abdeckscheibe überdeckt.

Für die Aufnahme des Displays sind verschieden Möglichkeiten offen welche aus dem Stand der Technik her schon von Display Befestigungen in Kombiinstrumenten im Fahrzeug Innenraum her bekannt sind. Das Display darf aber nicht unter großer Spannung verbaut werden da sonst die Gefahr der Zerstörung der Funktionalität des Displays besteht. Es besteht auch die Möglichkeit das Display in einem Spritzgussprozess mit zu implementieren und so ein 2K-Bauteil aus Display und Kunststoffgehäuse herzustellen. Das 2K-Element kann auch zu einem 3K Element erweitert werden, bei welchem die Abdeckscheibe zusätzlich mit aufgebracht wird. Das LCD Element 10 besteht aus Pixeln, die alle im einfachsten Fall dieselbe Farbe aufweisen. Die Ansteuerung erfolgt typisch im Stand der Technik mit der sogenannten Matrixansteuerung über Ansteuerung einzelne Zeilen horizontal und vertikal was somit ermöglicht einzelne Pixel an bzw. auszuschalten und somit das Licht durch das Display punktuell zu kontrollieren. Es ist auch möglich die Display Ansteuerung so auszulegen, dass im angesteuerten Zustand alle Pixel gleichzeitig aktiv bzw. inaktiv sind, sodass das Element vollständig erleuchtet ist. Bei der Verwendung von LCD-Elementen ist auch einen farbige Ausgestaltung möglich. Zudem kann die Farbe für die Warnanzeige variiert werden, um graduelle Abstufungen des Gefahrenhinweises zu erzielen. Bei der Verwendung von LCD Zellen können dazu noch Informationssymbole wie in einem konventionellen Display erzeugt werden.

Als aktives optisches Element sind Flüssigkristallanzeigen durch ihren weiten Entwicklungstand und ihrer Eigenschaften geeignet. Flüssigkristalle sind organische Verbindungen, die sowohl Eigenschaften von Flüssigkeiten als auch Eigenschaften von Festkörpern aufweisen.

Ein einfaches Flüssigkristall-Anzeigeelement besteht aus der "Schadt-Helfrich-Zelle": Die Innenseiten zweier Glasplatten sind mit einer transparenten Elektrodenschicht überzogen, dazwischen befindet sich der Flüssigkristall. Die Moleküle ordnen sich in eine vorgegebene Richtung, parallel zu der beispielsweise mit einem Polyamid beschichteten und in einer Vorzugsrichtung gebürsteten Oberfläche. Außerdem sind die äußeren beiden Platten mit um 90 Grad zueinander verdrehten Polarisationsfiltern beschichtet. Daraus ergibt sich, dass die Flüssigkristalle schraubenförmig angeordnet sind, bei einer um 90 Grad gedrehten Schraube spricht man von TN = Twisted Nematic.

Einfallendes Licht aus einer Hintergrundbeleuchtung wird vor dem Eintritt in die Flüssigkeit polarisiert. Durch die Verdrillung der Molekülflächen folgt eine Drehung der Polarisationsrichtung des Lichts. Dies hat wiederum zur Folge, dass das Licht den gegenübergesetzten Filter passieren kann und die Zelle hell erscheint. Im Ruhezustand ist das Display durchsichtig, diese Anordnung wird auch Normally-White-Mode genannt.

Legt man eine elektrische Spannung an die Elektroden an, so tritt unter dem Einfluss des elektrischen Feldes eine Drehung der Moleküle ein, sodass sie sich senkrecht zu den Elektrodenoberflächen ausrichten. Die Verdrillung ist damit aufgehoben, die Polarisationsrichtung des Lichts wird nicht mehr geändert und damit kann es den zweiten Polarisationsfilter nicht mehr passieren.

Für den Einsatz als optische Anzeige ist die Umkehrfunktion sinnvoll: Ordnet man die Polarisationsfilter parallel an, ist die Zelle ohne Spannung dunkel und mit Spannung hell. Man spricht vom Normally-Black-Mode. Dieser Aufbau wird in der Displaytechnik wegen schlechteren Kontrastverhältnissen eher nicht verwendet. Für die optische Anzeige ist es aber gut geeignet.

Ein Display kann theoretisch aus beliebig vielen solcher Zellen bestehen. Bei einem TFT-Monitor stellen drei Zellen zusammen gerade mal ein Farb-Pixel dar.

Bei STN-Displays (Super-Twisted-Nematic) wird der Verdrillwinkel der Moleküle auf 180-270° erhöht. Dadurch kann ein höherer Kontrast als bei herkömmlichen TN-Displays erreicht werden. Man nennt diese Displays auch Blue-Mode-LCDs, weil durch den Dichroismus Farbverschiebungen auftreten: Weiß wird dabei rötlich bis orange. Dieser Aufbau und auch die Farbverschiebung lässt sich vorteilhafterweise für die optische Anzeige verwenden. Die optischen Anzeige sollen in vielen Fällen in Rottönen warnen, so dass eine Farbkompensation gar nicht wünschenswert ist.

Für den Einsatz im Automobilbereich als optische Anzeige kommt eher die "Double Super Twisted" DSTN-Technik in Betracht, die als Massenware hergestellt wird.

Liegt an der aktiven Zelle ein elektrisches Feld an, dann geht das linear polarisierte Licht aus dem hinteren Polarisator dort glatt hindurch ohne verändert zu werden. Erst in der passiven Zelle erfolgt zirkulare Polarisation. Weil aber zirkular polarisiertes Licht von Polarisatoren nicht zurückgehalten wird, ist der

Bildschirm an dieser Stelle hell. Durch genaues Justieren sowohl des verwendeten Materials als auch der Zellabmessungen wird das durchgelassene Licht weiß.

Der komplexe Aufbau einer DSTN-Flüssigkristallzelle bedingt einen relativ hohen Aufwand bei ihrer Herstellung. Es wurde deshalb ein neues Verfahren entwickelt, das zu flacheren Displays mit geringerem Gewicht führt. Diese neue Lösung trägt den Namen triple supertwisted nematic LCD (TSTN). Hier findet sich nur eine STN-LC-Zelle. Die Farbstörungen der normalen STN-Technik werden durch zwei spezielle Folien ausgeglichen, die vor und hinter der Zelle - zwischen Polarisator und Glas - angebracht sind. Diese Folien sind verantwortlich für einen weiteren Namen dieser Technik: FST, "Film-Supertwisted". Der erheblich verbesserte Kontrast, das geringere Gewicht, die flachere und weniger aufwendige Bauweise haben TSTN-LC-Displays als Massenprodukt möglich gemacht.

Die Ausführungen zur LCD Zelle sollen die Erfindung nicht auf die Verwendung einer solchen Zelle einschränken. Es ist jede andere aktiv beleuchtete und beschaltbare Zelle wir eine OLED (Organic LED)oder AMOLED (Active Matrix Organic LED)-Zelle einsetzbar. Nur muss das Element robust genug für den Außeneinsatz am Automobil sein.

Die Zelle in der optischen Anzeige muss lediglich einen aktiv beleuchtete Zelle sein. Als Hintergrundbeleuchtung werden in den kommerziellen LCDs LEDs verwendet, die seitlich in eine Diffusorplatte einstrahlen. Über optische Folien wird das Licht homogen in die eigentliche Flüssigkristallzelle eingekoppelt.

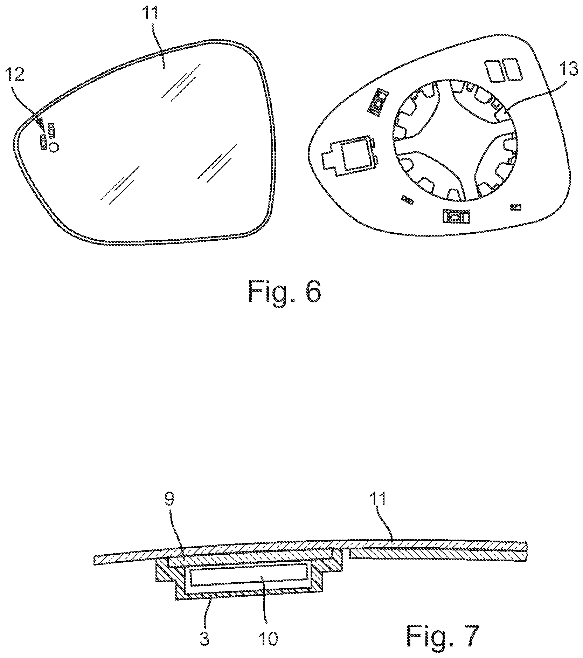

Figur 6 und 7 zeigen Lösungen für die optische Anzeige, die jedoch nicht Bestandteil der Erfindung sind. Im Stand der Technik sind bereits Beleuchtungsmodule bekannt, deren Licht durch ein Spiegelglas in Richtung Fahrer leuchtet. Zu diesem Zweck wird die spiegelnde Schicht flächig oder in Form von Zeichen entfernt. Das Beleuchtungselement wird hinter dem Spiegelglas angebracht.

Figur 6 zeigt ein Spiegelglas 11 in das Zeichen 12 eingebracht sind. Das Spiegelglas wird auf eine Trägerplatte 13 geklebt. In Bereich der Zeichen im Spiegelglas befindet sich die optische Anzeige als Hinterleuchtung des Zeichens. Die optische Anzeige ist dabei entweder als getrenntes Modul auf die Rückseite des Spiegelglases geklebt oder wird baulich in die Trägerplatte integriert, die mit dem Spiegelglas verbunden wird.

Der Aufbau der optischen Anzeige entspricht dem Aufbau nach Figur 4.

Ein Gehäusedeckel 3 verschließt ein Anzeigengehäuse 4 zu einem geschlossenen Modul, das in dieser Form verbaut wird. Innerhalb des Anzeigengehäuses 4 befinden sich die Lichtquelle, das LCD Element 10. Eine Optikscheibe 9 verschließt das Anzeigengehäuse, das direkt mit dem Spiegelglas 11 verbunden ist.

## Patentansprüche

1. Außenspiegelanordnung mit einer optischen Anzeige, die einen Spiegelfuß und einen Spiegelkopf sowie mindestens eine Gehäuseabdeckung (1) aufweist, die eine Ausnehmung für ein reflektierendes Element hat, wobei an der Außenspiegelanordnung eine Lichtöffnung (2) für den Durchtritt von Licht einer optischen Anzeige vorgesehen ist, wobei die optische Anzeige aus einem Anzeigengehäuse (4) besteht, in das ein optisch aktives Element für Darstellung von Farbe sowie Warnhinweisen im Seitenbereich der Gehäuseabdeckung (1) oder im Bereich des Spiegelfußes in einer Spiegelfußabdeckung eingebaut ist, so dass die Farbe für eine Warnanzeige variiert werden kann, um graduelle Abstufungen eines Gefahrenhinweises zu erzielen, **dadurch gekennzeichnet, dass** das optisch aktive Element ohne einzelne LEDs auf einer Platine als Lichtquelle in Form eines aktiv beleuchteten Display-Elements (10) ist.

2. Außenspiegelanordnung mit einer optischen Anzeige nach Anspruch 1 **dadurch gekennzeichnet, dass** das Anzeigengehäuse (4) mit einer äußeren Abdeckscheibe (8) verschlossen ist.

3. Außenspiegelanordnung mit einer optischen Anzeige nach Anspruch 1 und 2 **dadurch gekennzeichnet, dass** das Anzeigengehäuse (4) mindestens eine optische Scheibe (9) enthält.

4. Außenspiegelanordnung mit einer optischen Anzeige nach Anspruch 1 **dadurch gekennzeichnet, dass** das Display-Element (10) ein Element aus der Gruppe LCD, TFT-LCD, TSTN, FST, OLED, AMOLED mit integrierter Hintergrundbeleuchtung ist.

5. Außenspiegelanordnung mit einer optischen Anzeige nach Anspruch 1 **dadurch gekennzeichnet, dass** ein Display Element im Normally-Black-Mode eingebaut ist.

6. Außenspiegelanordnung mit einer optischen Anzeige nach Anspruch 1 **dadurch gekennzeichnet, dass** ein Display Element im Normally-White-Mode eingebaut ist.

7. Außenspiegelanordnung mit einer optischen Anzeige nach Anspruch 1 **dadurch gekennzeichnet, dass** ein Display Element eingebaut ist, dessen Farbintensität oder Graustufen ansteuerbar ist.

## Claims

1. An exterior mirror assembly with an optical display, which comprises a mirror base and a mirror head, as well as at least one housing cover (1), which has a recess for a reflecting element, whereby on the exterior mirror assembly a light opening (2) is provided for the passage of light of an optical display,
wherein
the optical display consists of a display housing (4), in which an optically active element for display of color as well as warning notices is mounted in the side region of the mirror housing (1) or in the region of the mirror base in a mirror base cover, so that the color for a warning display can be varied, in order to achieve gradual increments of a hazard warning, **characterized in that**,
the optically active element without individual LEDs on a printed circuit board as a light source is in the form of an actively illuminated display element (10).

2. The exterior mirror assembly with an optical display according to Claim 1, **characterized in that** the display housing (4) is closed with an external cover lens (8).

3. The exterior mirror assembly with an optical display according to Claim 1 and 2, **characterized in that** the display housing (4) contains at least one optical lens (9).

4. The exterior mirror assembly with an optical display according to Claim 1, **characterized in that** the display element (10) is an element from the group of LCD, TFT-LCD, TSTN, FST, OLED, AMOLED with integrated background lighting.

5. The exterior mirror assembly with an optical display according to Claim 1, **characterized in that** a display element is implemented in normally black mode.

6. The exterior mirror assembly with an optical display according to Claim 1, **characterized in that** a display element is implemented in normally white mode.

7. The exterior mirror assembly with an optical display according to Claim 1, **characterized in that** a display element is implemented, of which the color intensity or grayscale can be controlled.

## Revendications

1. Dispositif de rétroviseur extérieur avec un indicateur optique, ayant un pied de rétroviseur et une tête de rétroviseur ainsi qu'au moins un couvercle de boîtier (1) qui a un renfoncement pour un élément réflecteur, une ouverture lumineuse (2) pour le passage de lumière d'un indicateur optique étant prévue sur ledit dispositif de rétroviseur extérieur,
où
l'indicateur optique consiste en un boîtier indicateur (4) où est monté un élément optiquement actif pour l'affichage de couleurs et d'avertissements dans la partie latérale du couvercle de boîtier (1), ou au niveau du pied de rétroviseur dans un couvercle de pied de rétroviseur, de manière que la couleur pour une indication d'avertissement peut être varié pour obtenir une progression de degrés d'un avertissement de danger, **caractérisé en ce que** l'élément optiquement actif est sans LED individuelles sur une platine en tant source lumineuse sous la forme d'un élément afficheur (10) éclairé activement.

2. Dispositif de rétroviseur extérieur avec un indicateur optique selon la revendication 1, **caractérisé en ce que** le boîtier indicateur (4) est scellé par une vitre de couverture extérieure (8).

3. Dispositif de rétroviseur extérieur avec un indicateur optique selon les revendications 1 et 2, **caractérisé en ce que** le boîtier indicateur (4) comprend au moins une vitre optique (9).

4. Dispositif de rétroviseur extérieur avec un indicateur optique selon la revendication 1, **caractérisé en ce que** l'élément afficheur (10) est un élément du groupe LCD, TFT-LCD, TSTN, FST, OLED, AMOLED, à rétroéclairage intégré.

5. Dispositif de rétroviseur extérieur avec un indicateur optique selon la revendication 1, **caractérisé en ce qu'**un élément afficheur est monté en mode normalement noir.

6. Dispositif de rétroviseur extérieur avec un indicateur optique selon la revendication 1, **caractérisé en ce qu'**un élément afficheur est monté en mode normalement blanc.

7. Dispositif de rétroviseur extérieur avec un indicateur optique selon la revendication 1, **caractérisé en ce qu'**un élément afficheur est monté, dont l'intensité chromatique ou des niveaux de gris peuvent être commandés.
